# EUROPEAN PATENT APPLICATION

(11) **EP 4 309 981 A1**
(43) Date of publication of application: **24.01.2024**
(21) Application number: 22185467.2
(22) Date of filing: 18.07.2022
(51) Int. Cl.: B62D 65/04, B62D 35/00, B62D 29/04, B62D 33/06

(54) **A DEVICE/METHOD FOR ASSEMBLING A CABIN OF A VEHICLE**

(71) Applicant: VOLVO TRUCK CORPORATION, 405 08 Göteborg (SE)
(72) Inventor: RABOUIN, Guillaume, 38300 RUY MONTCEAU (FR)
(74) Representative: Germain Maureau

(57) **Abstract**

The invention relates to a back wall (1) for a cabin of a vehicle, **characterized in that** the back wall (1) is in one piece and is integrated with at least one equipment (D, UD, B), the back wall (1) being configured to be assembled with a sub assembly of the cabin, the sub assembly comprising at least a front wall of the cabin assembled with side walls (2) of the cabin.

## Description

### TECHNICAL FIELD

The invention relates to a device/method for assembling a cabin of a vehicle.

The invention can be applied in all vehicles equipped with a cabin comprising a back wall.

### BACKGROUND

It is known to have a truck cabin comprising a front wall, a rear wall and side walls, and comprising at least one equipment inside or outside the cabin.

It is known in particular to have the back wall being preliminary welded to the cabin structure, thus closing the cabin as an entire close and rigid shape.

Usually, interior equipment goes through the doors meaning that the process is long and cumbersome, when the equipment are to be installed inside the cabin, especially if some equipment is important in size.

### SUMMARY

An object of the invention is to provide a back wall for a cabin of a vehicle, **characterized in that** the back wall is in one piece and is integrated with at least one equipment, the back wall being configured to be assembled with a sub assembly of the cabin, the sub assembly comprising at least a front wall of the cabin assembled with side walls of the cabin.

According to these provisions, i.e. making rear wall in one piece and integrating to it some cabin equipment, reduces assembly time and allows better access to the inside of the cabin during the assembly of the cabin until the last step of the assembly.

According to one embodiment, the at least one equipment is one of an internal equipment, or an external equipment.

According to one embodiment, the internal equipment is at least one of a bunk frame, and a bunk storage.

According to one embodiment, the external equipment is a deflector.

According to one embodiment, the back wall is made in composite material.

Choosing composite material reduces weight of the cabin.

According to an aspect, the invention provides a vehicle comprising a cabin comprising a back wall according to anyone of the embodiments described herein above.

According to an embodiment, the vehicle is a truck.

According to a further aspect, the invention provides a method to assemble a cabin, **characterized by** the steps of :
- providing a front wall of the cabin and side walls of the cabin, the front wall and the side walls being configured to be assembled together,
- assembling the front wall and the side walls of the cabin to provide a sub assembly of the cabin,
- providing a back wall in one piece and integrated with at least one equipment, the back wall being configured to be assembled with the sub assembly of the cabin,
- assembling the back wall with the sub assembly of the cabin.

According to these provisions, i.e. making rear wall in one piece and integrating to it some cabin equipment, reduces assembly time and allows better access to the inside of the cabin during the assembly, until the last step of the assembly method. "Closing" the cabin with the back wall at the end of the process improves drastically the assembly cycle time and helps reducing the cost. Thus, production of the cabin is made easier and faster.

According to an embodiment of the method, the step of assembling the back wall comprises bonding or screwing the back wall on the sub assembly.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a representation of a back wall of a cabin of a vehicle, according to an embodiment of the invention, the back wall being in one piece and integrating a deflector.
Fig. 2 is a representation of a back wall of a cabin of a vehicle, the back wall being in one piece and integrating a deflector and a bunk storage.
Fig. 3 is an exploded view of a cabin, with a back wall and a side wall of the cabin of a vehicle, the back wall being in one piece and integrating a deflector, a bunk, and a bunk storage.

### DETAILED DESCRIPTION OF EXAMPLE EMBODIMENTS OF THE INVENTION

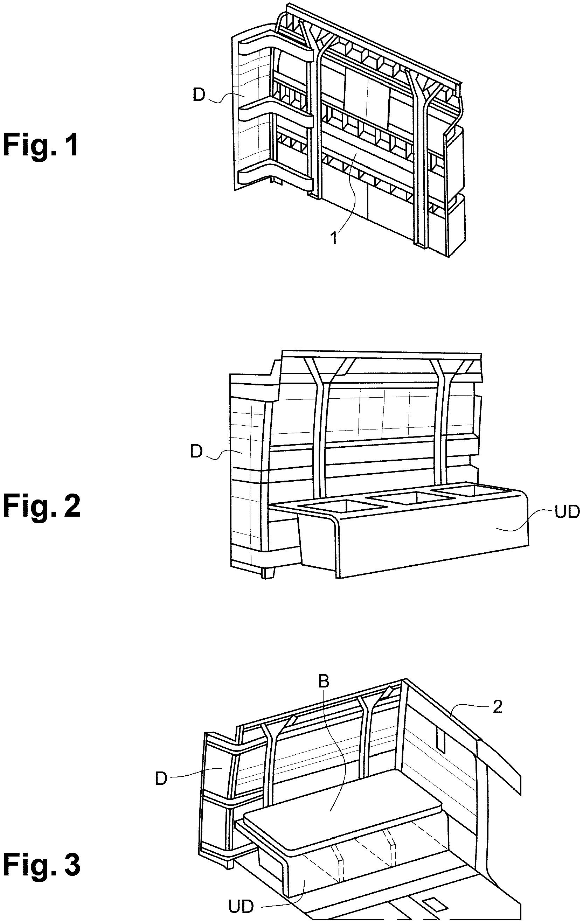

Figure 1 illustrates a back wall 1 for a cabin of a vehicle, such as a truck; the back wall 1 is in one piece and is integrated with at least one equipment D, such as a deflector.

Figure 2 illustrates the back wall 1 in one piece and integrated with the deflector D, and bunk storage UD.

For example the back wall 1 according to the invention is made in composite material.

The back wall 1 according to the invention is configured to be assembled with a sub assembly of the cabin, the sub assembly comprising at least a front wall of the cabin assembled with side walls 2 of the cabin. This is illustrated in figure 3, which presents an exploded view of the cabin, with the back wall 1, in one piece, integrating internal equipments, i.e. internal to the cabin, such as a bunk storage UD and a bunk B, and external equipments, i.e. external to the cabin, such as deflectors D; in figure 3, the back wall 1 is assembled with a sub assembly of the cabin comprising at least side walls 2, only one of which is represented, and a front wall, not represented.

According to these provisions, i.e. making rear wall in one piece and integrating to it some cabin equipment, reduces assembly time and allows better access to the inside of the cabin during the assembly of the cabin until the last step of the assembly.

According to an aspect, the invention relates to a vehicle comprising a back wall 1 as described herein above.

According to another aspect, the invention relates to a method to assemble a cabin, the method comprising the steps of :
- providing a front wall 1 of the cabin and side walls of the cabin, the front wall and the side walls 2 being configured to be assembled together,
- assembling the front wall and the side walls 2 of the cabin to provide a sub assembly of the cabin,
- providing a back wall 1 in one piece and integrated with at least one equipment, the back wall 1 being configured to be assembled with the sub assembly of the cabin,
- assembling the back wall 1 with the sub assembly of the cabin.

According to these provisions, i.e. making rear wall in one piece and integrating to it some cabin equipment, reduces assembly time and allows better access to the inside of the cabin during the assembly, until the last step of the assembly method. "Closing" the cabin with the back wall at the end of the process improves drastically the assembly cycle time and helps reducing the cost. Thus, production of the cabin is made easier and faster.

In particular, the step of assembling the back wall 1 with the sub assembly of the cabin, is performed after at least one other internal equipment has been provided and put inside de cabin.

In particular, the step of assembling the back wall 1 comprises bonding or screwing the back wall 1 on the sub assembly.

It is to be understood that the present invention is not limited to the embodiments described above and illustrated in the drawings; rather, the skilled person will recognize that many changes and modifications may be made within the scope of the appended claims.

## Claims

1. A back wall (1) for a cabin of a vehicle, **characterized in that** the back wall (1) is in one piece and is integrated with at least one equipment (D, UD, B), the back wall (1) being configured to be assembled with a sub assembly of the cabin, the sub assembly comprising at least a front wall of the cabin assembled with side walls (2) of the cabin.

2. A back wall according to claim 1, wherein the at least one equipment is one of an internal equipment, or an external equipment.

3. A back wall according to claim 2, wherein the internal equipment is at least one of a bunk frame (B) and a bunk storage (UD).

4. A back wall according to claim 2, wherein the external equipment is a deflector (D).

5. A back wall according to anyone of preceding claims, wherein the back wall (1) is made in composite material.

6. A vehicle comprising a cabin comprising a back wall (1) according to anyone of preceding claims.

7. A method to assemble a cabin, **characterized by** the steps of:
- providing a front wall (1) of the cabin and side walls of the cabin, the front wall and the side walls (2) being configured to be assembled together,
- assembling the front wall and the side walls (2) of the cabin to provide a sub assembly of the cabin,
- providing a back wall (1) in one piece and integrated with at least one equipment, the back wall (1) being configured to be assembled with the sub assembly of the cabin,
- assembling the back wall (1) with the sub assembly of the cabin.
